# EUROPEAN PATENT APPLICATION

(11) **EP 2 746 917 A2**
(43) Date of publication of application: **25.06.2014**
(21) Application number: 13159127.3
(22) Date of filing: 14.03.2013
(51) Int. Cl.: G06F 3/0482

(54) **User interface with navigation context**

(30) Priority: 19.12.2012 US 201261739319 P
(71) Applicant: QNX Software Systems Limited, Kanata, Ontario K2K 0B3 (CA)
(72) Inventor: Nguyen, Truc, Kanata, Ontario K2K 0B3 (CA)
(74) Representative: Hibbert, Juliet Jane Grace

(57) **Abstract**

A system and method provides a user interface for navigation context. The user interface may present visual indications to a user of where the user has navigated to in a hierarchy of the user interface. The representations of the multiple levels of the user interface navigated by the user may be partially overlaid. Portions of the previously navigated levels of the user interface may be partially non-overlaid in order show a path that the user has previously navigated to reach a current level in the user interface. The representation of the path navigated through the levels of the user interface provides a context to the user. The representation of the context by nonoverlapping portions of previously navigated levels may provide for efficient use of limited screen area available on, for example, mobile computing devices.

## Description

### BACKGROUND

### 1. Cross-Reference to Related Applications

This application claims priority from U.S. Provisional Patent Application Serial No. 61/739,319, filed December 19, 2012, the entirety of which is incorporated herein by reference.

### 2. Technical Field

The present disclosure relates to the field of user interfaces for computing devices. In particular, to a system and method for user interface with navigation context.

### 3. Related Art

As computing devices become more capable (e.g., feature rich) the complexity of the user interface (UI) typically increases (e.g., more hierarchically arranged menus and sub-menus). There is typically a trade-off on small screen computing devices between providing the user with context information about their current location in the hierarchy and efficient use of the limited screen area.

### BRIEF DESCRIPTION OF DRAWINGS

The system and method may be better understood with reference to the following drawings and description. The components in the figures are not necessarily to scale, emphasis instead being placed upon illustrating the principles of the disclosure. Moreover, in the figures, like referenced numerals designate corresponding parts throughout the different views.

Other systems, methods, features and advantages will be, or will become, apparent to one with skill in the art upon examination of the following figures and detailed description. It is intended that all such additional systems, methods, features and advantages be included with this description and be protected by the following claims.

Fig. 1 is a schematic representation of a user interface in a first context.

Fig. 2 is a schematic representation of the user interface in a second context.

Fig. 3 is a schematic representation of the user interface in a third context.

Fig. 4 is a schematic representation of the user interface showing an iconic menu.

Fig. 5 is flow diagram representing a method for user interface with navigation context.

Fig. 6 is a schematic representation of a system for user interface with navigation context.

### DETAILED DESCRIPTION

A system and method for a user interface with navigation context. The user interface of a computing device may present visual indications to a user of where the user has navigated to in a hierarchy of the user interface. The visual indications may include showing a portion of a previously navigated interface level (e.g., a menu) and highlighting a selection made by the user to navigate to a subsequent level (e.g., a sub-menu) of the user interface. The representations of the multiple levels of the user interface navigated by the user may be partially overlaid. Portions of the previously navigated levels of the user interface may be non-overlaid in order show a path, through the levels of the user interface, that the user has previously navigated to reach a current level (e.g., location) in the user interface. The representation of the path navigated through the levels of the user interface provides a context to the user. The context representation of the navigated path (e.g., sequence of levels and selections) may be referred to as breadcrumbs. The representation of the context (e.g., breadcrumbs) by non-overlapping portions of previously navigated levels, that may include highlighted selections, may provide for efficient use of limited screen area (a.k.a. real estate) available on, for example, mobile computing devices.

Other systems may make less efficient use of the screen area, for example, by representing the entirety, or a significant portion, of previously navigated user interface levels or by reserving a portion of the screen area for representing the path navigated by the users. Still other systems may make efficient user of the screen area but may fail to provide context information to the user. The present system and method may provide for efficient use of screen area while providing context information to the user.

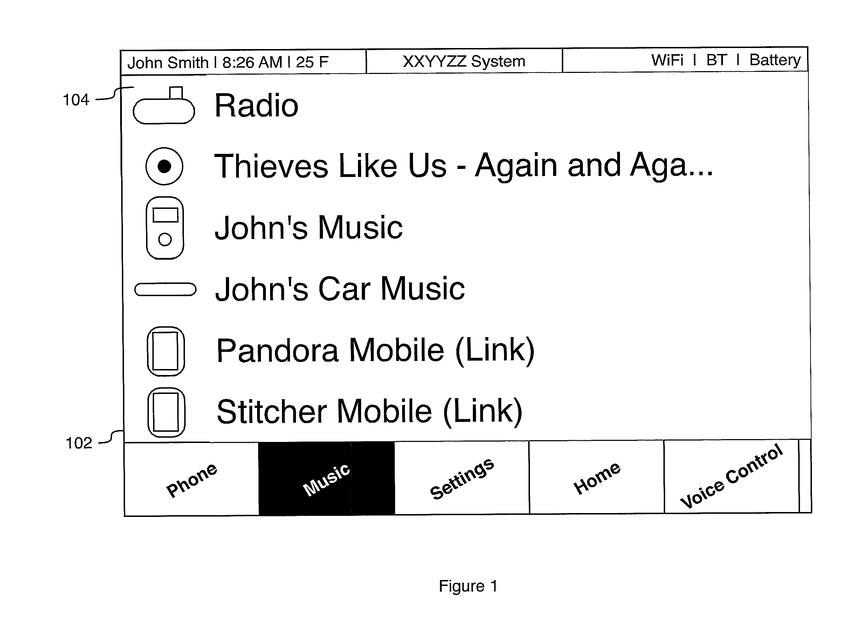

Figure 1 is a schematic representation of a user interface in a first context. In this example, a first window 102 in the user interface of a computing device (e.g., system) contains a menu for a media player showing a multitude of media sources. The sources include a radio, a compact disc (CD) (Thieves Like Us - Again and Aga..), a portable music player (John's Music), a music repository (e.g., a hard disc drive) associated with an in-car infotainment system (John's Car Music) and two sources of stream media (Pandora Mobile and Stitcher Mobile). A user may select any of the items in the menu 104 (i.e., selectable items) by means such as a touch-sensitive screen, a pointing device (e.g., a computer mouse), keyboard input or other similar means.

When a menu item (e.g., a selectable item) is selected, the system may respond by displaying content or a further menu (e.g., a sub-menu) associated with the selected menu item. The menu 104 may represent a first level of the interface while one or more sub-menus may represent other levels of the user interface.

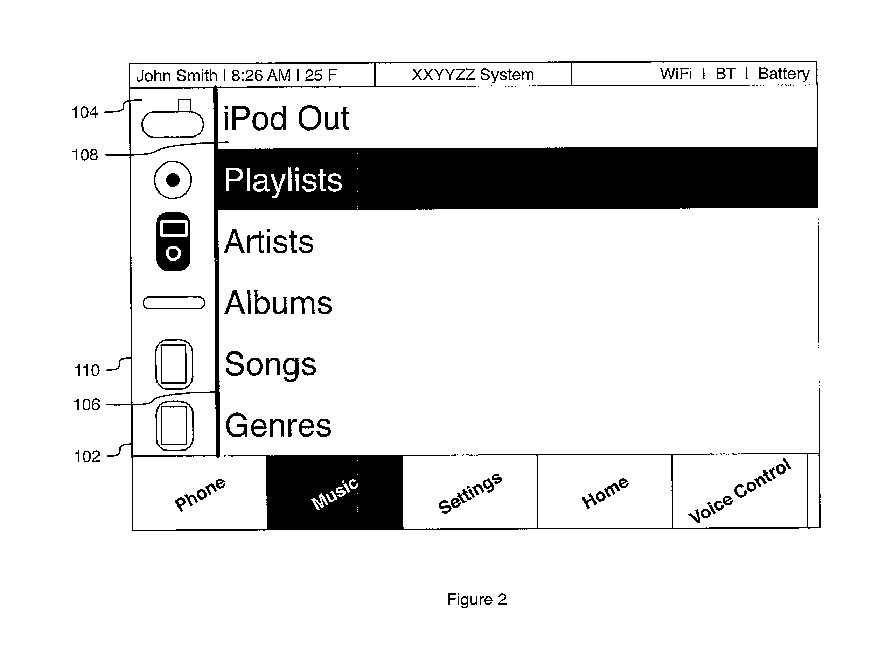

Figure 2 is a schematic representation of the user interface in a second context. In the example illustrated, the user has selected the media source 'John's Music' in the menu 104 of media sources of Figure 1. In Figure 2 a second window 106 contains a menu 108 of music groupings on the media source 'John's Music'. The groupings include Playlists, Artists, Albums, Songs and Genres. The second window 106, containing the menu 108 of music groupings, overlays a portion of the first window 102 containing the menu 104 of music sources. A portion of the first window 102 not overlaid by the second window 106 (i.e., the non-overlaid portion) may contain at least of part of the selection 'John's Music', such as in the example illustrated a music player icon associated with 'John's Music'. The part of the selected item (e.g., John's Music) contained in the non-overlaid portion 110 of the first window 102 may be highlighted so that it stands out visually from other content of the non-overlaid portion of the first window 102.

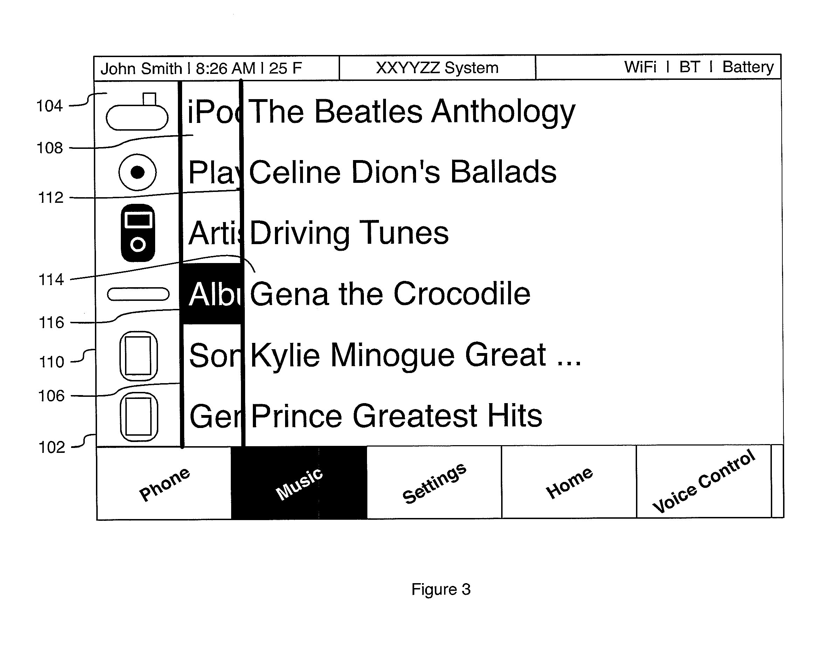

Figure 3 is a schematic representation of the user interface in a third context. In the illustrated example, the user has selected the media source 'John's Music' in the menu 104 of media sources of Figure 1 and has selected the music grouping 'Albums' in the menu 108 of music groupings of Figure 2. In Figure 3 a third window 112 contains a menu 114 of albums on the media source 'John's Music'. The albums include The Beatles Anthology, Celine Dion's Ballads, Driving Tunes, Gena the Crocodile, Kylie Minogue Great..., and Prince Greatest Hits. The third window 112, containing the menu 114 of albums, overlays a portion of the second window 106 containing the menu 108 of music groupings. A portion of the second window 106 not overlaid by the third window 112 (the non-overlaid portion) may contain at least of part of the selection 'Albums'. The part of the selected item (Albums) contained in the non-overlaid portion 116 of the second window 106 may be highlighted so that it stands out visually from other content of the non-overlaid portion 116 of the second window 106.

Further selections may be made in further sub-menus and the steps similar to those described above with reference to Figures 1-3 may be repeated. In addition or alternatively, when a pre-determined number of windows have been opened or when another windows derived criteria is met, opening a further window may result in one or more of the non-overlaid portions of previously opened windows being removed from the display and one or more of the remaining windows may be repositioned, moved or resized.

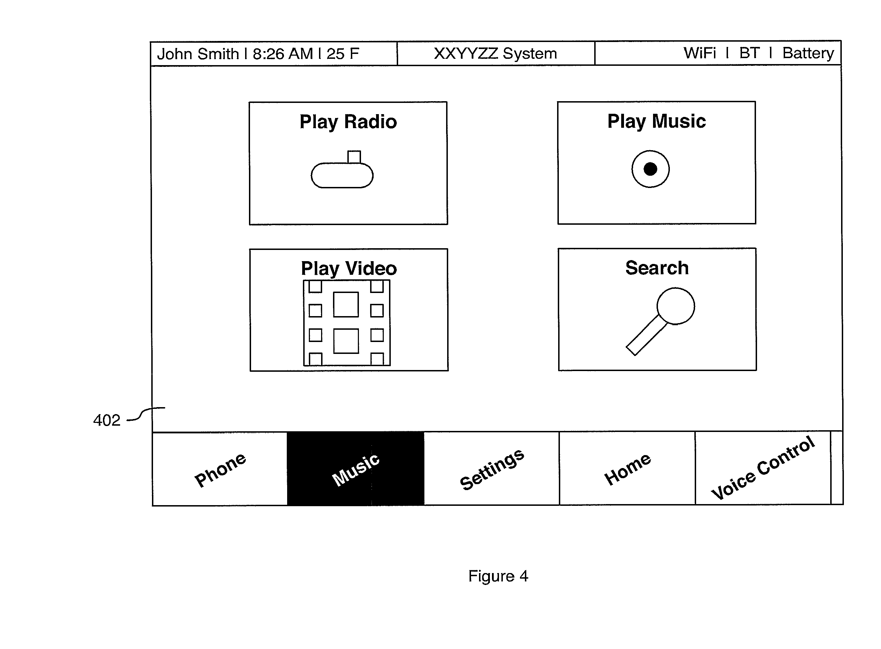

Each of the example menus 104, 108, 114 illustrated in Figures 1-3 are list menus. Alternatively the user interface may include any combination of menus each comprising one or more of a list, icons, thumbnails, buttons, tabs or other representations of one or more selectable items. Figure 4 is a schematic representation of the user interface showing an exemplary iconic menu 402 having four selectable icons (Play Radio, Play Music, Play Video and Search).

When a displayed window (e.g., 102, 106, 112) is closed or dismissed, the display may be returned to a presentation of the previously opened windows similar to that which was displayed before the closed or dismissed window was opened. One or more windows may be closed or dismissed by reselecting a previous selection (e.g., a breadcrumb) shown in a non-overlaid portion (e.g., 110, 116) of a previously opened window. The display may be returned to a state similar to when the previous selection was originally selected.

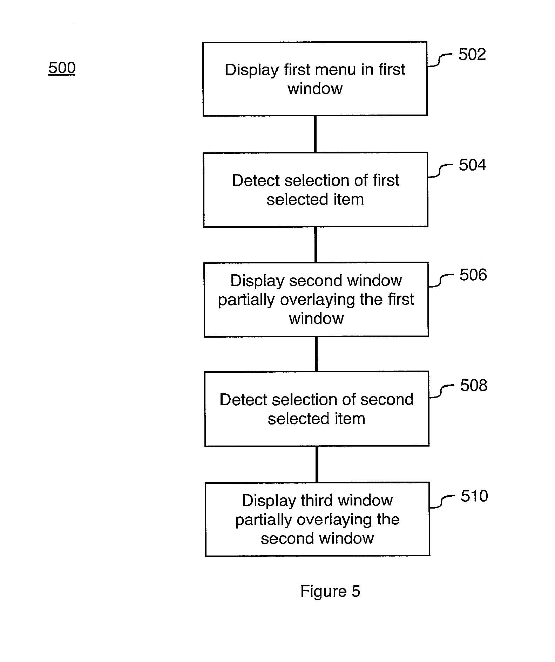

Figure 5 is flow diagram representing a method for user interface with navigation context. The method 500 may start with displaying a first menu, having one or more first selectable items, in a first window 502. The first menu may comprise one or more of a list, icons, thumbnails, buttons and tabs. Then a selection of a first selected item from the one or more first selectable items may be detected 504. The selection may be made by a user of a computing device implementing the method 500. Selection may be made by any of a touch or gesture on a touch-sensitive display, a mouse or other pointing device click, a button press, a keyboard entry or other similar user selection mechanisms. Responsive to detecting selection of the first selected item, a second window 106, having content responsive to the first selected item, is displayed with the second window 106 partially overlaying the first window 102, where at least a portion of the first selected item is visible in a non-overlaid portion of the first window 506. The first selected item may be highlighted responsive to detecting selection of the first selected item. The second window 106 may contain a second menu that is a sub-menu of the first menu. When the second window 106 contains a second menu having one or more second selectable items, the method 500 may further comprise detecting selection of a second selected item from the one or more second selectable items 508. The selection may be made by the user of the computing devices implementing the method 500. Responsive to detecting selection of the second selected item, displaying a third window 112, having content responsive to the second selected item, the third window 112 partially overlaying the second window 106, where at least a portion of the second selected item is visible in a non-overlaid portion of the second window 510. The second selected item may be highlighted responsive to detecting selection of the second selected item. The third window 112 may contain a third menu that is a sub-menu of the second menu. The method may comprise fewer acts or additional acts. The example method is meant to be illustrative and is not intended to be limiting.

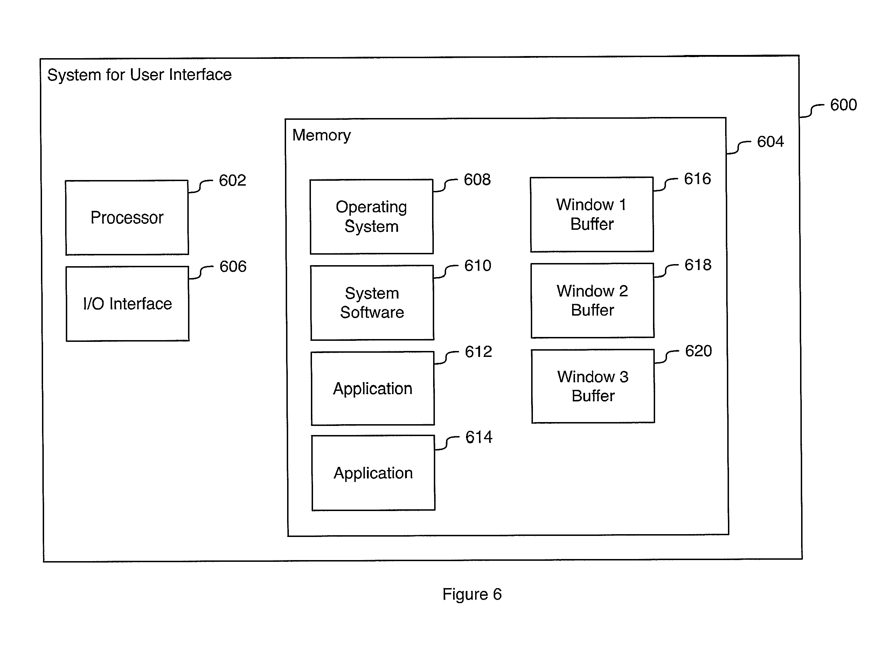

Figure 6 is a schematic representation of a system for user interface with navigation context. The system 600 may comprise a processor 602, an input and output (I/O) interface 606, and memory 604.

The processor 602 may comprise a single processor or multiple processors that may be disposed on a single chip, on multiple devices or distributed over more that one system. The processor 602 may be hardware that executes computer executable instructions or computer code embodied in the memory 604 or in other memory to perform one or more features of the system. The processor 602 may include a general purpose processor, a central processing unit (CPU), a graphics processing unit (GPU), an application specific integrated circuit (ASIC), a digital signal processor (DSP), a field programmable gate array (FPGA), a digital circuit, an analog circuit, a microcontroller, any other type of processor, or any combination thereof.

The memory 604 may comprise a device for storing and retrieving data, processor executable instructions, or any combination thereof. The memory 604 may include non-volatile and/or volatile memory, such as a random access memory (RAM), a read-only memory (ROM), an erasable programmable read-only memory (EPROM), or a flash memory. The memory 604 may comprise a single device or multiple devices that may be disposed on one or more dedicated memory devices or on a processor or other similar device. Alternatively or in addition, the memory 604 may include an optical, magnetic (hard-drive) or any other form of data storage device.

The memory 604 may store computer code, such as an operating system 608, system software 610, and applications 612, 614. The computer code may include instructions executable with the processor 602. The computer code may be written in any computer language, such as C, C++, assembly language, channel program code, and/or any combination of computer languages. The memory 604 may store information in data structures including, for example, buffers 616, 618, 620 for storing the contents of windows.

The I/O interface 606 may receive inputs from a user of the system 600 such as, for example, the selection of menu items. The inputs may be received via inputs devices such as, for example, a touch-sensitive screen, a pointing device (e.g., mouse), one or more buttons, a keyboard or other similar input devices. The I/O interface 606 may output user interface content through a display screen or other similar output device. The input and output devices may be included in, or be apart from, the system 600.

All of the disclosure, regardless of the particular implementation described, is exemplary in nature, rather than limiting. The system 600 may include more, fewer, or different components than illustrated in Figure 6. Furthermore, each one of the components of system 600 may include more, fewer, or different elements than is illustrated in Figure 6. Flags, data, databases, tables, entities, and other data structures may be separately stored and managed, may be incorporated into a single memory or database, may be distributed, or may be logically and physically organized in many different ways. The components may operate independently or be part of a same program or hardware. The components may be resident on separate hardware, such as separate removable circuit boards, or share common hardware, such as a same memory and processor for implementing instructions from the memory. Programs may be parts of a single program, separate programs, or distributed across several memories and processors.

The functions, acts or tasks illustrated in the figures or described may be executed in response to one or more sets of logic or instructions stored in or on computer readable media. The functions, acts or tasks are independent of the particular type of instructions set, storage media, processor or processing strategy and may be performed by software stored in a non-transitory media, hardware, integrated circuits, firmware, micro code and the like, operating alone or in combination. Likewise, processing strategies may include multiprocessing, multitasking, parallel processing, distributed processing, and/or any other type of processing. In one embodiment, the instructions are stored on a removable media device for reading by local or remote systems. In other embodiments, the logic or instructions are stored in a remote location for transfer through a computer network or over telephone lines. In yet other embodiments, the logic or instructions may be stored within a given computer such as, for example, a CPU.

While various embodiments of the invention have been described, it will be apparent to those of ordinary skill in the art that many more embodiments and implementations are possible within the scope of the present invention. Accordingly, the invention is not to be restricted except in light of the attached claims and their equivalents.

## Claims

1. A method for a user interface with navigation context presented on a display device comprising:
displaying (502) a first menu (104), having one or more first selectable items, in a first window;
detecting (504) selection of a first selected item from the one or more first selectable items; and
responsive to detecting selection of the first selected item, displaying (506) a second window (106) having content responsive to the first selected item, the second window (106) partially overlaying the first window (102), where at least a portion of the first selected item is visible in a non-overlaid portion of the first window (110).

2. The method of claim 1, further comprising highlighting the first selected item responsive to detecting selection of the first selected item.

3. The method of claim 1, where the first menu (104) comprises one or more of a list, icons, thumbnails, buttons and tabs.

4. The method of claim 1, where the content of the second window (106) includes a second menu (108) having one or more second selectable items, the method further comprising:
detecting (508) selection of a second selected item from the one or more second selectable items; and
responsive to detecting selection of the second selected item, displaying (510) a third window (112) having content responsive to the second selected item, the third window (112) partially overlaying the second window (106), where at least a portion of the second selected item is visible in a non-overlaid portion of the second window (116).

5. The method of claim 4, further comprising highlighting the first selected item responsive to detecting selection of the first selected item and highlighting the second selected item responsive to detecting selection of the second selected item.

6. The method of claim 4, where the second menu (108) is a sub-menu of the first menu (104).

7. The method of claim 1, where the acts of detecting a selection (504) and displaying a window (506) are repeated for further sets of selectable items and windows having content responsive to selections from the further sets of selectable items.

8. The method of claim 7, where non-overlaid portions of one or more windows are removed from the display device responsive to a criteria, derived from a number of windows displayed, being met.

9. The method of claim 1 further comprising, responsive to detecting reselection of the first selected item, ceasing to display the second window (106) and returning the display of the first window (102) to substantially the same state as before the first selection was detected.

10. A system for a user interface with navigation context presented on a display device comprising:
one or more processors; and
memory containing instructions executable by the one or more processors to configure the system to implement the method of any of claims 1 to 9.
